# EUROPEAN PATENT APPLICATION

(11) **EP 4 834 580 A1**
(43) Date of publication of application: **04.11.2026**
(21) Application number: 24911492.7
(22) Date of filing: 27.12.2024
(51) Int. Cl.: B32B 17/02

(54) **HEAT INSULATION PAD AND PREPARATION METHOD THEREFOR**

(30) Priority: 29.12.2023 CN 202311871988
(71) Applicant: Gongyi Van-Research Innovation Composite Material Co., Ltd., Zhengzhou, Henan 451261 (CN)
(72) Inventor: ZHANG, Dongsheng, Zhengzhou, Henan 451261 (CN); SONG, Liuyang, Zhengzhou, Henan 451261 (CN); ZHAO, Yan, Zhengzhou, Henan 451261 (CN); MA, Chenglong, Zhengzhou, Henan 451261 (CN); NIU, Chaohuang, Zhengzhou, Henan 451261 (CN); ZHANG, Jicheng, Zhengzhou, Henan 451261 (CN)
(74) Representative: Murgitroyd & Company
(86) International application number: PCT/CN2024/143237
(87) International publication number: WO 2025/140574

(57) **Abstract**

Disclosed are a heat insulation pad and a preparation method therefor, relating to the field of aerogel technology. The heat insulation pad includes a thermal insulation core material, where the thermal insulation core material includes at least two layers of thermal insulation felt connected via an adhesive layer; and the adhesive layer includes a water-based adhesive and is provided with gas escape channels. The heat insulation pad of the present disclosure exhibits a large thickness, a flat surface, a small thickness tolerance, and excellent thermal insulation performance.

## Description

### TECHNICAL FIELD

The present disclosure relates to the field of aerogel technology, and in particular, to a heat insulation pad and a preparation method therefor.

### BACKGROUND

During battery use, certain heat is generated due to electrochemical changes and material transport within a battery cell. Without full dissipation of the certain heat into the environment, heat accumulation may occur inside the battery cells. Once heat accumulation causes an internal temperature of the battery cell to become excessively high, side reactions may occur within the battery cell, reducing cycle life of the battery. In severe cases, thermal runaway may occur and propagate to adjacent battery cells, triggering a chain reaction. Due to excellent thermal insulation properties, elasticity, and deformability of aerogel, a heat insulation pad made of thermal insulation felt finds application in battery thermal management, specifically serving as a thermal insulation and buffering component between bare cells of the battery cells, and between the bare cells and top covers.

For existing thermal insulation felts on market, some aerogel-based felts may only produce thin products, and a thickness of a single layer may not meet requirements for the heat insulation pads used in battery thermal management. Although some aerogel-based felts exhibit a large thickness, the large-thickness aerogel base felts further exhibit a large thickness tolerance, poor surface flatness, poor internal structural uniformity, and uneven thermal insulation performance across different areas, thus failing to meet the requirements for heat insulation pads used in the battery thermal management. Therefore, how to produce a heat insulation pad with greater thickness and a flat surface is an urgent problem to be solved.

### SUMMARY

Endpoints and any values of ranges disclosed herein are not limited to precise ranges or values, and the ranges or values may be understood to include values close to the ranges or values. For numerical ranges, endpoint values of various ranges, the endpoint values of various ranges and individual point values, and the individual point values may be combined to obtain one or more new numerical ranges, and the numerical ranges may be deemed as specifically disclosed herein.

The present disclosure aims to overcome the above-mentioned problems existing in the prior art and to provide a heat insulation pad and a preparation method therefor. The method of the present disclosure enables the preparation of a heat insulation pad with greater thickness and a flat surface.

To achieve above purpose, a first aspect of the present disclosure provides a heat insulation pad, including a thermal insulation core material, where the thermal insulation core material includes at least two layers of thermal insulation felt connected via an adhesive layer; and the adhesive layer includes a water-based adhesive and is provided with gas escape channels.

In some embodiments, based on an area of the thermal insulation felt, a coverage rate of the water-based adhesive ranges from 30% to 70%; and/or,
a width of the gas escape channels ranges from 8 mm to 70 mm; and/or,
in the adhesive layer, the gas escape channels are arranged at intervals along a cross-machine direction of the thermal insulation felt; and/or,
in the adhesive layer, a shape presented by the water-based adhesive is at least one of strip-shaped, dot-shaped, and block-shaped;
preferably, in the adhesive layer, when the shape presented by the water-based adhesive is strip-shaped or block-shaped, a coating width of the water-based adhesive is ranges from 8 mm to 30 mm.

In some embodiments, a thickness of the heat insulation pad is greater than 1 mm; and/or,
a thickness tolerance of the heat insulation pad is within ±0.25 mm, preferably within ±0.15 mm; and/or,
a thickness of each layer of the thermal insulation felt is less than 0.9 mm, preferably 0.2 mm-0.8 mm; and/or,
a thickness tolerance of each layer of the thermal insulation felt is within ±0.1 mm.

In some embodiments, the thermal insulation felt includes base felt and/or composite felt;
preferably, the base felt includes at least one of pre-oxidised fibre felt, glass fibre felt, and ceramic fibre felt;
preferably, the composite felt includes the base felt and a functional material, and the functional material preferably includes at least one of a thermal insulation material, an opacifier material, a buffer material, and a structural component; and/or,
the water-based adhesive includes at least one of silica sol, alumina sol, sodium polyacrylate, polyvinyl alcohol (PVA), methyl cellulose, carboxymethyl cellulose (CMC), hydroxyethyl cellulose (HEC), hydroxypropyl methyl cellulose (HPMC), and sodium alginate.

In some embodiments, the thermal insulation material includes at least one of thermal insulation powder, aerogel, a heat preservation material, and a fibre-reinforced aerogel composition; and/or,
the buffer material includes foam and/or silicone rubber.

In some embodiments, the heat insulation pad further includes at least one of an encapsulation layer and a functional layer;
preferably, an encapsulation material of the encapsulation layer includes an encapsulation film material and/or an encapsulation coating;
preferably, the functional layer includes at least one of a thermally conductive layer, a heat-absorbing layer, a heat-reflective layer, and a buffer layer;
more preferably, the buffer layer includes foam and/or silicone rubber.

In some embodiments, the heat insulation pad includes at least three layers of the thermal insulation felt, and adjacent two layers of the thermal insulation felt are connected via the adhesive layer;
preferably, on different adhesive layers, coating positions of the water-based adhesive are not completely identical.

A second aspect of the present disclosure provides a preparation method for a heat insulation pad, including:
(1) bonding at least two layers of thermal insulation felt with a water-based adhesive, so that adjacent layers of the thermal insulation felt are connected to each other, to obtain a bonded preform; and
(2) performing a drying treatment on the bonded preform to obtain a heat insulation pad including the thermal insulation felt connected via an adhesive layer;
where the adhesive layer is provided with gas escape channels.

In some embodiments, based on an area of the thermal insulation felt, a coating rate of the water-based adhesive ranges from 30% to 70%; and/or,
a width of the gas escape channels ranges from 8 mm to 70 mm; and/or,
in the adhesive layer, the gas escape channels are arranged at intervals along a cross-machine direction of the thermal insulation felt; and/or,
in the adhesive layer, a shape presented by the water-based adhesive is at least one of strip-shaped, dot-shaped, and block-shaped;
preferably,where in the adhesive layer, when the shape presented by the water-based adhesive is strip-shaped or block-shaped, a coating width of the water-based adhesive ranges from 8 mm to 30 mm.

In some embodiments, the thermal insulation felt includes base felt and/or composite felt;
preferably, the base felt includes at least one of pre-oxidised fibre felt, glass fibre felt, and ceramic fibre felt;
preferably, the composite felt includes a base felt and a functional material, the functional material preferably includes at least one of a thermal insulation material, an opacifier material, a buffer material, and a structural component; and/or,
the water-based adhesive includes at least one of silica sol, alumina sol, sodium polyacrylate, polyvinyl alcohol (PVA), methyl cellulose, carboxymethyl cellulose (CMC), hydroxyethyl cellulose (HEC), hydroxypropyl methyl cellulose (HPMC), and sodium alginate.

In some embodiments, in step (2), a drying method includes at least one of oven drying, tunnel drying, and microwave drying; and
preferably, drying conditions include: a drying temperature of 60°C to 200 °C, and a drying time of 1 min to 30 min.

In some embodiments, conditions for the oven drying include: a temperature of 60 °C to 200 °C, and a drying time of 5 min to 30 min; or,
conditions for the tunnel drying include: a drying temperature of 120 °C to 180 °C preferably 140-160°C, and a drying time of 1 min to 15 min, preferably 2-10 min; or,
conditions for the microwave drying include: a drying temperature of 70 °C to 130 °C, preferably 80-120°C, and a drying time of 1 min to 10 min, preferably 2-5 min.

In some embodiments, the preparation method for the heat insulation pad further includes providing a functional layer on at least one side of at least one layer of the thermal insulation felt and/or outside a thermal insulation core material; and
preferably, the functional layer includes at least one of a thermally conductive layer, a heat-absorbing layer, a heat-reflective layer, and a buffer layer;
more preferably,where the buffer layer includes foam and/or silicone rubber.

In some embodiments, the preparation method for the heat insulation pad further includes performing an encapsulation treatment on a dried thermal insulation core material to obtain the heat insulation pad;
preferably,where a material employed in the encapsulation treatment includes an encapsulation film material and/or an encapsulation coating; and
preferably, the encapsulation coating is a flame-retardant coating.

A third aspect of the present disclosure provides an application of the heat insulation pad according to the first aspect or the heat insulation pad prepared by the preparation method according to the second aspect as a thermal insulation component in a battery field.

The present disclosure achieves the following beneficial effects by employing the above-mentioned technical solutions.
(1) The heat insulation pad of the present disclosure exhibits a greater thickness and a less thickness tolerance, as well as better thermal insulation performance. Addition of the adhesive to the heat insulation pad increases mechanical strength of the heat insulation pad and renders the heat insulation pad less prone to deformation, delamination, and bulging, thereby meeting application requirements of power battery thermal management.
(2) The method of the present disclosure is simple to operate, conducive to achieving continuous and standardised production, with relatively higher production efficiency and relatively lower production costs.

Endpoints and any values of ranges disclosed herein are not limited to precise ranges or values, and the ranges or values may be understood to include values close to the ranges or values. For numerical ranges, endpoint values of various ranges, the endpoint values of various ranges and individual point values, and the individual point values may be combined with one another to obtain one or more new numerical ranges, and the numerical ranges may be deemed as specifically disclosed herein. In this document, unless otherwise specified, data ranges include the endpoints.

### DETAILED DESCRIPTION OF THE EMBODIMENTS

Technical solutions of the present disclosure may be described in further detail below in conjunction with specific embodiments. It should be understood that the following embodiments are only illustrative and explanatory of the present disclosure and should not be construed as limiting scope of protection of the present disclosure. Technologies realised based on the above content of the present disclosure are covered within scope intended to be protected by the present disclosure.

It should be noted that the numerical expressions such as "first" and "second" in the present disclosure are used to distinguish different substances or usage methods and do not represent a difference in order.

Unless otherwise defined, scientific and technical terms used in the present disclosure carry the same meaning as commonly understood by those skilled in the art.

The inventors of the present disclosure found the following during the research process. By stacking multiple layers of thermal insulation felt with a small tolerance and a uniform thickness and coating the thermal insulation felt with adhesive, a heat insulation pad with greater thickness may be prepared. However, problems such as large thickness tolerance are prone to occur. Even if no problems occur when obtaining the heat insulation pad, problems such as increased thickness tolerance may occur during subsequent use, especially when the heat insulation pad is obtained by stacking three or more layers of the thermal insulation felt. At the same time, issues such as yellowing may accompany with the above-mentioned problems. By leaving gas escape channels in an adhesive layer during adhesive coating, especially in combination with preferred drying conditions, a heat insulation pad with greater thickness and small thickness tolerance may be produced, and the quality of the heat insulation pad remains stable during subsequent storage and use.

A first aspect of the present disclosure provides a heat insulation pad, including a thermal insulation core material, where the thermal insulation core material includes at least two layers of thermal insulation felt connected via an adhesive layer; and the adhesive layer includes a water-based adhesive and is provided with gas escape channels.

The thermal insulation felt may be a conventional layered material with thermal insulation properties. In some embodiments, the thermal insulation felt includes base felt and/or composite felt.

In some embodiments, the base felt includes at least one of pre-oxidised fibre felt, glass fibre felt, and ceramic fibre felt.

In some embodiments, the glass fibre felt is a needle-punched glass fibre felt and/or a wet-process glass fibre felt.

The composite felt may be a single-layer structure or a multi-layer structure. When the composite felt is a single-layer structure, the composite felt may be a product where the base felt is blended with a material with a certain function. When the composite felt is a multi-layer structure, that is, a laminated structure, in addition to the base felt and/or the material including the base felt and a functional material, the composite felt may further include a functional layer, etc. Descriptions of the functional material and the functional layer are as follows.

In some embodiments, the composite felt includes the base felt and the functional material. The functional material preferably includes at least one of a thermal insulation material, an opacifier material, a buffer material, and a structural component. The functional material may be added in powder form. The structural component is, for example, a metal part with certain mechanical strength and may provide structural support.

In some embodiments, the thermal insulation material includes at least one of thermal insulation powder, aerogel, a heat preservation material (for example, rock wool, asbestos mesh), and a fibre-reinforced aerogel composition. The fibre-reinforced aerogel composition may be a product formed by pressing fibres and the thermal insulation material.

When the composite felt includes the aerogel, the composite felt is an aerogel felt, and may be, for example, at least one of pre-oxidised fibre aerogel felt, glass fibre aerogel felt, and ceramic fibre aerogel felt.

In some embodiments, the thermal insulation powder includes micron thermal insulation powder and/or nano thermal insulation powder.

In some embodiments, a specific material of the micron thermal insulation powder is not limited and may be selected according to requirements. For example, a specific material of the micron thermal insulation powder may be at least one of micron fumed alumina powder, micron fumed silica powder, silica fume, white carbon black, diatomaceous earth, fly ash, micron alumina aerogel powder, and micron silica aerogel powder.

In some embodiments, a particle size Dv50 of the micron thermal insulation powder ranges from 1 µm to 100 µm.

In the present invention, Dv50 refers to a particle size corresponding to a point where a cumulative volume particle size distribution percentage of a sample reaches 50%, and the particle size is measurable by a particle size analyser.

In some embodiments, a specific material of the nano thermal insulation powder is not limited and may be selected according to requirements. For example, the specific material of the nano thermal insulation powder may be at least one of nano fumed silica powder, nano fumed alumina powder, nano zirconia powder, nano titanium oxide powder, nano iron oxide powder, nano zirconia aerogel powder, nano silica aerogel powder, and nano alumina aerogel powder.

In some embodiments, a particle size Dv50 of the nano thermal insulation powder ranges from 5 nm to 100 nm.

The thermal insulation powder may be mixed with an adhesive and the optional opacifier material to embed the thermal insulation powder into pores of a fibre felt. The adhesive facilitates the connection between the thermal insulation powder and the fibres in the fibre felt.

In some embodiments, the opacifier material includes an opacifying agent.

In some embodiments, a selection of the opacifying agent is not specifically limited and may be selected according to actual requirements. For example, the opacifying agent may be at least one of silicon carbide, titanium dioxide, zirconia, zinc oxide, potassium hexatitanate whisker, and silicon carbide whisker.

In some embodiments, a particle size Dv50 of the opacifying agent ranges from 2 µm to 10 µm.

In some embodiments, the opacifying agent is potassium hexatitanate whisker and/or silicon carbide whisker.

In some embodiments, an aspect ratio of the potassium hexatitanate whisker ranges from 5 to 25, and a diameter of the potassium hexatitanate whisker ranges from 1.5 µm to 5 µm.

In some embodiments, an aspect ratio of the silicon carbide whisker ranges from 20 to 30, and a diameter of the silicon carbide whisker ranges from 0.2 µm to 2.5 µm.

In the present invention, the diameter of the whisker may be measured by microscopic observation.

The buffer material may provide better resilience and impact resistance to the composite felt. In some embodiments, the buffer material includes foam and/or silicone rubber. The foam may include, but is not limited to, Polyurethane (PU) foam, Expandable Polyethene (EPE), Chloroprene Rubber (CR) foam, Ethylene-Vinyl Acetate (EVA) foam, Polyethene (PE) foam, Polypropylene (PP) foam, Polyvinyl Chloride (PVC) foam, polyester foam, polyurethane foam, melamine foam, etc.

It should be understood that those skilled in the art may also add additives for achieving desired functions according to requirements, and exhaustive listing therefor is not provided herein. Unless otherwise specified, the materials used may be conventional in the art.

In some embodiments, a thickness of each layer of the thermal insulation felt is less than 0.9 mm, preferably ranges from 0.2 mm to 0.8 mm. For example, the thickness of each layer of the thermal insulation felt may be 0.20 mm, 0.25 mm, 0.3 mm, 0.4 mm, 0.5 mm, 0.6 mm, 0.7 mm, or 0.8 mm, and value within the range formed by two of the above-mentioned point values.

In some embodiments, a thickness tolerance of each layer of the thermal insulation felt is within ±0.1 mm.

In some embodiments, the thermal insulation felt is a sheet material or a roll material.

In some embodiments, the thermal insulation felt is the roll material.

In some embodiments, a thickness of the heat insulation pad is 1 mm or more. For example, the thickness of the heat insulation pad may be 1 mm, 2 mm, 3 mm, 4 mm, 5 mm, 6 mm, 7 mm, 8 mm, 9 mm, or 10 mm.

In some embodiments, a thickness tolerance of the heat insulation pad is within ±0.25 mm, preferably within ±0.15 mm.

In the present disclosure, the type of water-based adhesive is not specifically limited and may be selected according to actual requirements. For example, the water-based adhesive includes at least one of silica sol, alumina sol, sodium polyacrylate, polyvinyl alcohol (PVA), methyl cellulose, carboxymethyl cellulose (CMC), hydroxyethyl cellulose (HEC), hydroxypropyl methyl cellulose (HPMC), and sodium alginate. For a heat insulation pad of a certain thickness, a strength after coating and laminating multiple layers of the thermal insulation felt is greater than a strength of a single-layer thick aerogel felt. Therefore, the heat insulation pad is less prone to deformation and may meet application requirements for power battery thermal management.

In some embodiments, in the adhesive layer, a shape presented by the water-based adhesive is at least one of strip-shaped, dot-shaped, and block-shaped.

In some embodiments, in the adhesive layer, when the shape presented by the water-based adhesive is strip-shaped or block-shaped, a coating width of the water-based adhesive ranges from 8 mm to 30 mm. For example, the coating width of the water-based adhesive may be 8 mm, 9 mm, 10 mm, 15 mm, 20 mm, 25 mm, or 30 mm. It should be understood that the width refers to a dimension of a shorter side in the strip-shaped form or the block-shaped form.

In some embodiments, based on the area of the thermal insulation felt, a coverage rate of the water-based adhesive ranges from 30% to 70%. For example, the coating rate of the water-based adhesive may be 30%, 40%, 50%, 60%, or 70%.

In the present disclosure, the coverage rate of the water-based adhesive is a ratio of an adhesive coating area to an area of the thermal insulation felt.

In the present disclosure, the gas escape channels refer to channels allowing gas to pass freely, provided in the adhesive layer. The provision of the gas escape channels results in better flatness and more uniform thickness of the heat insulation pad.

In some embodiments, a width of the gas escape channels ranges from 8 mm to 70 mm. For example, the width of the gas escape channels may be 8 mm, 10 mm, 20 mm, 30 mm, 40 mm, 50 mm, 60 mm, or 70 mm. The width of the gas escape channels refers to a width of a channel for gas escape.

In some embodiments, in the adhesive layer, the gas escape channels are arranged at intervals along the cross-machine direction of the thermal insulation felt, allowing water vapour generated during drying of the adhesive at different positions to be discharged through the gas escape channels arranged at intervals, thereby obtaining a heat insulation pad with more uniform thickness, better flatness, and better bonding effect. In the technical solution, the thermal insulation core material obtained after pasting and drying needs to be cut to a target size according to requirements. When the gas escape channels are too wide, after cutting, some thermal insulation felts may not be coated with adhesive, and may not ensure the product remains bonded after cutting. Therefore, the gas escape channels may not be provided too wide.

In some embodiments, the heat insulation pad includes at least three layers of the thermal insulation felt, and adjacent two layers of the thermal insulation felt are connected via the adhesive layer. The thickness of the thermal insulation felts may be same or different.

In some embodiments, on different adhesive layers, coating positions of the water-based adhesive may be same or different. That is, on different adhesive layers, the width of the gas escape channels may be same or different. The coating positions of the water-based adhesive on different adhesive layers may be staggered, thereby improving a thickness uniformity of final heat insulation pad product.

In some embodiments, on different adhesive layers, the coating positions of the water-based adhesive are not completely identical.

In some embodiments, the heat insulation pad includes at least one of an encapsulation layer and a functional layer.

In some embodiments, the heat insulation pad includes the encapsulation layer, and the encapsulation layer is configured to encapsulate the thermal insulation core material. An encapsulation material of the encapsulation layer is not specifically limited and may be selected according to actual requirements.

In some embodiments, the encapsulation material of the encapsulation layer includes an encapsulation film material and/or an encapsulation coating.

In some embodiments, the encapsulation film material may include at least one of PE film, Polyethene Terephthalate (PET) film, Polycarbonate (PC) film, Polyimide (PI) film, and PP film.

In some embodiments, the encapsulation coating is a flame-retardant coating.

In some embodiments, the flame-retardant coating may include at least one of polyurethane coating, epoxy coating, silicone coating, modified silicone coating, and EVA coating.

In some embodiments, type of the functional layer is not specifically limited and may be selected according to actual requirements, such as at least one of a thermally conductive layer, a heat-absorbing layer, a heat-reflective layer, and a buffer layer.

In some embodiments, the thermally conductive layer may be a layer composed of materials such as graphite.

In some embodiments, the heat-absorbing layer may include a phase change material (for example, at least one of paraffin wax, inorganic hydrate salt, and hydrogel). A method of encapsulating the thermal insulation core material with the heat-absorbing layer may include impregnating the phase change material into the thermal insulation core material or wrapping the thermal insulation core material.

In some embodiments, the heat-reflective layer includes gold foil, silver foil, nickel foil, aluminium foil, copper foil, metal-coated polyester or metal-coated PI film. The heat-reflective layer may be disposed on one side or two sides of each thermal insulation felt or may wrap the thermal insulation core material to reflect thermal radiation.

A material of the buffer layer is not specifically limited and may be selected according to actual requirements, such as the foam and/or the silicone rubber. The foam may exist in a form of a foam layer and may be disposed on one side or two sides of each thermal insulation felt or may wrap the thermal insulation core material. When the buffer layer is the silicone rubber, the buffer layer may be a silicone rubber frame or a silicone rubber strip. The silicone rubber frame may be disposed at an outer edge of the thermal insulation core material, surrounding the thermal insulation core material on four sides, and causing the thermal insulation core material to be embedded in the silicone rubber frame. The silicone rubber strips may be disposed on one side or two sides of the thermal insulation core material, and disposed on two opposite edges of one side of the thermal insulation core material. Alternatively, the silicone rubber strips may also be disposed around the outer edge of the thermal insulation core material and disposed at two opposite ends of the thermal insulation core material.

In some embodiments, the heat insulation pad includes the encapsulation layer and the functional layer. The functional layer is disposed on one side or two sides of each thermal insulation felt, and the encapsulation layer wraps the above-mentioned functional layer and the thermal insulation core material.

In some embodiments, the heat insulation pad includes the encapsulation layer and the functional layer. The functional layer is disposed on one side or two sides of the thermal insulation core material, and the encapsulation layer wraps the above-mentioned functional layer and the thermal insulation core material.

In some embodiments, the heat insulation pad includes the encapsulation layer and the functional layer. The functional layer directly wraps the thermal insulation core material, and the encapsulation layer wraps the exterior of the above-mentioned functional layer.

A second aspect of the present disclosure provides a preparation method for a heat insulation pad, including:
(1) bonding at least two layers of thermal insulation felt with a water-based adhesive, so that adjacent layers of the thermal insulation felt are connected to each other, to obtain a bonded preform; and
(2) performing a drying treatment on the bonded preform to obtain a heat insulation pad including the thermal insulation felt connected via an adhesive layer;
where the adhesive layer is provided with gas escape channels.

In some embodiments, the heat insulation pad includes two layers of thermal insulation felt. The specific preparation method includes: applying an adhesive on an upper surface or a lower surface of a first thermal insulation felt; superimposing a second thermal insulation felt onto a surface coated with the adhesive; drying after superimposition; and cutting into sheets to obtain a first heat insulation pad.

In some embodiments, the heat insulation pad includes three layers of thermal insulation felt. The specific preparation method includes: applying an adhesive on the upper surface and the lower surface of the first thermal insulation felt; superimposing the second thermal insulation felt and a third thermal insulation felt respectively onto the upper and lower surfaces of the first thermal insulation felt coated with the adhesive; after superimposition, drying and cutting into a sheet-like heat insulation pad.

In some embodiments, the heat insulation pad includes three layers of thermal insulation felt. The specific preparation method includes: applying the adhesive on one surface of the first thermal insulation felt; applying the adhesive on one surface of the second thermal insulation felt; superimposing the first thermal insulation felt, the second thermal insulation felt, and the third thermal insulation felt, with the adhesive disposed between every two adjacent thermal insulation felts; after superimposition, drying and cutting into a sheet-like heat insulation pad.

In some embodiments, according to actual thickness requirements, the heat insulation pad may be obtained by unwinding, adhesive coating, and superimposing four or more layers of thermal insulation felt, followed by drying after superimposition in an above-mentioned manner.

In some embodiments, the thermal insulation felt is a sheet material or a roll material. When the thermal insulation felt is the roll material, the preparation method for the heat insulation pad includes: unwinding the roll material, applying the adhesive on the thermal insulation felt after unwinding, and after superimposition and drying, cutting into the sheet material.

Furthermore, in some embodiments, the multilayer thermal insulation felt is the sheet material. The specific operation method includes applying the adhesive on the sheet-like thermal insulation felt, superimposing, and drying to obtain the heat insulation pad.

Structure and properties of the thermal insulation felt and the adhesive layer refer to the first aspect, and are not described in detail herein.

The difficulty in the superimposing after the adhesive coating lies in the following. The thermal insulation felt itself exhibits good thermal insulation performance, and thus drying the adhesive is relatively difficult. Therefore, a degree of drying of the thermal insulation felt affects the delamination condition of the heat insulation pad. When the number of thermal insulation felt layers is high, drying is difficult, and the dried product is prone to bulging, thereby further leading to delamination of the thermal insulation felt. After encapsulation is completed, for a heat insulation pad with residual moisture, that is, a heat insulation pad not completely dry, when an external ambient temperature rises or a pressure drops, the gas expands, causing bulging. Therefore, drying conditions such as drying temperature, drying time, and corresponding number of the thermal insulation felt layers and amount of adhesive applied exhibit an important impact on the final heat insulation pad being free from delamination and bulging.

In some embodiments, in step (2), a drying method includes at least one of oven drying, tunnel drying (for example, tunnel furnace), and microwave drying. The method for the drying treatment facilitates the preparation of a heat insulation pad with better uniformity, and the obtained heat insulation pad is not prone to delamination.

In some embodiments, drying conditions include: a drying temperature of 60 °C to 200°C, and a drying time of 1 min to 30 min.

In some embodiments, conditions for the oven drying include: a temperature of 60°C to 200°C, and a drying time of 5 min to 30 min.

In some embodiments, the drying method is tunnel drying. For example, a bonded preform may be placed on a moving element transporting the product into the tunnel for drying. The drying conditions include: a drying temperature of 120°C to 180°C, preferably 140 °C to 160°C, and a drying time of 1 min to 15 min, preferably 2 min to 10 min.

In some embodiments, the drying method is microwave drying. The drying conditions include: a drying temperature of 70°C to 130°C, preferably 80 °C to 120°C, and a drying time of 1 min to 10 min, preferably 2 min to 5 min.

In some embodiments, the preparation method for the heat insulation pad further includes applying pressure to the thermal insulation core material via a press roller before or during drying to obtain a flat surface.

In some embodiments, when the thermal insulation core material is the sheet material, pressure is applied to the thermal insulation core material via at least two press rollers, and a distance between the two press rollers is less than a length of the sheet material along the feeding direction.

In some embodiments, the preparation method for the heat insulation pad further includes providing a functional layer on at least one side of at least one layer of the thermal insulation felt and/or outside a thermal insulation core material. The functional layer may be disposed on one side or two sides of each thermal insulation felt, on one side or two sides of the thermal insulation core material, or directly wrapping the thermal insulation core material.

In some embodiments, the preparation method for the heat insulation pad further includes performing an encapsulation treatment on a dried thermal insulation core material to obtain the heat insulation pad.

In some embodiments, the material employed in the encapsulation treatment includes an encapsulation film material and/or an encapsulation coating.

The descriptions of the functional layer and the material for the encapsulation treatment refer to the first aspect and are not described in detail herein.

A third aspect of the present disclosure provides an application of the heat insulation pad according to the first aspect or the heat insulation pad prepared by the preparation method according to the second aspect as a thermal insulation component in a battery field.

Those skilled in the art may use the heat insulation pad according to requirements, to ensure thermal safety of a battery or to perform battery thermal management. For example, the heat insulation pad may be applied in manufacture of an energy storage cabinet or in manufacture of a battery pack for new energy vehicles or the like.

The present invention further provides a battery module, including a plurality of battery cells arranged in an array, where at least two adjacent battery cells are provided with the above-mentioned heat insulation pad.

The present invention also provides electrical equipment including the above-mentioned battery module.

The technical solutions in the embodiments of the present disclosure may be clearly and completely described below in conjunction with the embodiments of the present disclosure. Obviously, the described embodiments are only a part of the embodiments of the present disclosure, rather than all of the embodiments. Based on the embodiments in the present disclosure, all other embodiments obtained by those skilled in the art without creative work may fall within protection scope of the present disclosure.

The materials, reagents, etc., used in the following embodiments, unless otherwise specified, may be obtained from commercial sources.

The present disclosure is described in detail below with reference to specific embodiments. The specific embodiments are provided for understanding rather than limiting the present disclosure.

### Embodiment Group 1 and Comparative Example Group 1

A roll of wet-process glass fibre aerogel felt with a thickness of 0.8 mm (with a thickness tolerance within ± 0.1 mm) was unwound. Then, an adhesive was applied onto an upper surface of the wet-process glass fibre aerogel felt along a cross-machine direction of the heat insulation pad at preset intervals by a coating device. The wet-process glass fibre aerogel felt was then sequentially superimposed, and the adhesive was applied again. After covering the uppermost layer with the wet-process glass fibre aerogel felt, a resulting structure was sent into a tunnel furnace for drying or dried using 110 °C hot air combined with microwave drying. Thereafter, the dried structure was pressed flat by a press roller and cut into sheets to obtain a thermal insulation core material. The thermal insulation core material was then encapsulated with a PET encapsulation film to obtain a heat insulation pad.

Different numbers of aerogel felt layers, coating methods, adhesive amounts per layer, and drying conditions are shown in Table 1, and results of delamination condition are also shown in Table 1.

In Embodiment Group 1, the thickness tolerance of the heat insulation pad obtained by stripe coating was within ±0.15 mm. In Comparative Example Group 1, the thickness tolerance of the heat insulation pad obtained by full coating was about ± 0.3 mm. The above-mentioned thickness tolerance does not include cases of bulging.

**Table 1**

| Number | Drying method | Coating method | Number of aerogel felt layers | Adhesive amount per layer (g/m²) | Drying conditions | Delamination condition |
|---|---|---|---|---|---|---|
| Embodiment 1-1 | | Stripe | 2 | 80 | 150°C3min | No delamination |
| Embodiment 1-2 | | Stripe | 3 | 80 | 150°C4.5mir | No delamination |
| Embodiment 1-3 | | Stripe | 4 | 80 | 150°C7min | No delamination |
| Embodiment 1-4 | Tunnel drying | Stripe | 5 | 80 | 150°C9min | No delamination |
| Embodiment 1-5 | | Stripe | 6 | 80 | 150°C11min | No delamination and yellowing |
| Comparative example 1-1 | | Full coating | 2 | 150 | 150°C3min | Delamination |
| Comparative example 1-2 | | Full coating | 3 | 150 | 150°C4.5min | Delamination |
| Comparative example 1-3 | | Full coating | 4 | 150 | 150°C7min | Delamination |
| Comparative example 1-4 | | Full coating | 5 | 150 | 150°C9min | Delamination |
| Comparative example 1-5 | | Full coating | 6 | 150 | 150°C11min | No delamination and yellowing |
| Comparative example | 1-6Microwave drying 1-7(110°C hot air) | Full coating | 6 | 150 | 4min | Delamination |
| Comparative example | | Full coating | 6 | 150 | 4min | Delamination |
| Embodiment 1-6 | | Stripe | 8 | 80 | 3min | No delamination |

From the results in Table 1, the heat insulation pad prepared by the present disclosure with multiple thin layers of aerogel felt superimposed and bonded with adhesive exhibits good uniformity and is less prone to delamination.

The thermal insulation core materials of Embodiments 1-1 to 1-5 were taken for measurement of thermal conductivity and shear strength. A monolithic felt of the same material and with a thickness equal to a total thickness of the heat insulation pad was taken for measurement of thermal conductivity and shear strength according to a same method. The results are shown in Table 2. The thermal conductivity was measured by a heat flow method. The shear strength was measured according to GB/T 1450.2-2005: "Test method for punching shear strength of fibre-reinforced plastics".

**Table 2**

| Number | Thermal conductivity | Shear strength | Comparative Example | Thermal conductivity | Shear strength |
|---|---|---|---|---|---|
| Embodiment 1-1 | 0.01623 | 0.92MPa | 1.6 mm monolithic felt | 0.01492 | 0.37MPa |
| Embodiment 1-2 | 0.0164 | 0.82MPa | 2.4 mm monolithic felt | 0.01647 | 0.41MPa |
| Embodiment 1-3 | 0.01688 | 1.15MPa | 3.2 mm monolithic felt | 0.01644 | 0.40MPa |
| Embodiment 1-4 | 0.01608 | 0.90MPa | 4 mm monolithic felt | 0.01524 | 0.38MPa |
| Embodiment 1-5 | 0.01623 | 0.92MPa | 4.8 mm monolithic felt | 0.01492 | 0.37MPa |

From the above data, compared to the monolithic felt, the thermal insulation core material of the present disclosure exhibits better thermal insulation performance and significantly higher shear strength.

### Embodiment Group 2

Operation was performed according to the method described in Embodiment 1-2, except for a difference in a composition of the thermal insulation core material.

Embodiment 2-1: The wet-process glass fibre aerogel felt was replaced with a wet-process glass fibre base felt, with the thickness and the number of layers unchanged.

Embodiment 2-2: The middle wet-process glass fibre aerogel felt in Embodiment 1-2 was replaced with a PU foam layer with a thickness of 0.8 mm, with other conditions unchanged. That is, a structure of the thermal insulation core material was wet-process fibreglass aerogel felt - foam layer - aerogel felt.

The thermal conductivity and resilience of the prepared thermal insulation core material were tested. The resilience was measured according to GB/T 34336-2017 "Nano-porous aerogel composite thermal insulation products". The test results are shown in Table 3.

**Table 3**

| Number | Thermal conductivity | Resilience | Shear strength |
|---|---|---|---|
| Embodiment 1-2 | 0.01647 | 68.42% | 0.82MPa |
| Embodiment 2-1 | 0.03423 | 87.73% | 0.78MPa |
| Embodiment 2-2 | 0.01688 | 78.95% | 0.9MPa |

### Embodiment Group 3

Operation was performed according to the method described in Embodiment 1-1, except for differences in the number of aerogel felt layers and a coverage rate of the water-based adhesive based on a area of the thermal insulation felt (30%, 40%, 45%, 50%, 60%, and 70%, respectively). Peel force of the prepared thermal insulation core material was tested, and results are shown in Table 4.

The peel force was measured by a 180° peel test. Five test specimens with a size of 250 mm × (25 ± 0.5) mm were cut from a sample to be tested. The specimens were placed in a testing room (with temperature of 25 ± 3°C and humidity of 50 ± 5% RH) for at least 2 hours. A universal testing machine was configured to continuously peel the specimens at a speed of 300 ± 10 mm/min, with an effective bonded surface peeling length of about 250 mm, and the peel force was measured.

When the coating rate was greater than or equal to 50%, the thermal insulation core material was damaged during tearing, and the corresponding force was taken as the peel force.

**Table 4**

| Number | Number of aerogel felt layers | Peel force (N) | | | | | |
|---|---|---|---|---|---|---|---|
| | | 30% | 40% | 45% | 50% | 60% | 70% |
| Embodiment | 2 | 18.95 | 22.34 | 24.58 | 27.99 | 29.75 | 32.11 |
| 3-1 | | | | | | | |
| Embodiment 3-2 | 3 | 19.22 | 21.78 | 23.44 | 28.54 | 27.86 | 29.35 |
| Embodiment 3-3 | 4 | 18.53 | 23.15 | 22.97 | 27.64 | 30.02 | 28.55 |
| Embodiment 3-4 | 5 | 19.11 | 22.95 | 23.67 | 29.21 | 29.16 | 29.31 |

### Embodiment Group 4

Operation was performed according to the method described in Embodiment 1-1, except for differences in the number of aerogel felt layers (2, 3, 4, and 5 layers, respectively) and the width of gas escape channels (8 mm, 16 mm, 24 mm, 32 mm, 40 mm, 48 mm, 56 mm, and 64 mm, respectively), while maintaining a coating rate of 50%. The peel force of the prepared thermal insulation core material was tested, and the results are shown in Table 5. The probability of bulging occurrence per 100 samples was recorded, and the results are shown in Table 6. Bulging refers to a local area where a significant bulge is visible to a naked eye, and pressing may expel the gas. Bulging area indicates unsuccessful bonding.

**Table 5**

| Number | Number of aerogel felt layers | Peel force (N) | | | | | | | |
|---|---|---|---|---|---|---|---|---|---|
| | | 8mm | 16mm | 24mm | 32mm | 40mm | 48mm | 56mm | 64mm |
| Embodiment 4-1 | 2 | 27.33 | 28.12 | 28.16 | 29.67 | 28.71 | 28.41 | 28.44 | 30.05 |
| Embodiment 4-2 | 3 | 28.16 | 27.72 | 27.06 | 27.53 | 29.18 | 30.62 | 29.16 | 29.75 |
| Embodiment 4-3 | 4 | 28.99 | 29.21 | 30.08 | 30.11 | 29.16 | 28.28 | 29.71 | 28.66 |
| Embodiment 4-4 | 5 | 28.72 | 28.33 | 29.57 | 29.08 | 31.21 | 29.13 | 27.65 | 29.43 |

**Table 6**

| Number | Number of aerogel felt layers | Bulging rate (%) | | | | | | | |
|---|---|---|---|---|---|---|---|---|---|
| | | 8mm | 16mm | 24mm | 32mm | 40mm | 48mm | 56mm | 64mm |
| Embodiment 4-1 | 2 | 0 | 0 | 0 | 0 | 0 | 0 | 0 | 0 |
| Embodiment 4-2 | 3 | 0 | 0 | 0 | 0 | 0 | 0 | 0 | 1% |
| Embodiment 4-3 | 4 | 0 | 0 | 0% | 0 | 2% | 1% | 2% | 3% |
| Embodiment 4-4 | 5 | 2% | 2% | 4% | 3% | 3% | 3% | 5% | 5% |

It should be noted that, in this document, the terms "comprising", "including", or other variants therefor are intended to cover a non-exclusive inclusion, thereby a process, method, article, or apparatus including a series of elements includes not only corresponding elements but also other elements not explicitly listed, or further includes elements inherent to such process, method, article, or apparatus. Without further limitation, an element defined by the phrase "comprising a ..." does not preclude an existence of additional identical elements in the process, method, article, or apparatus that includes the above-mentioned element. Furthermore, it should be pointed out that a scope of the methods and devices in the embodiments of the present disclosure is not limited to performing functions in an order shown or discussed, and may also include performing functions in a substantially simultaneous manner or in a reverse order according to the functions involved. For example, the above-mentioned methods may be performed in an order different from described order, and various steps may further be added, omitted, or combined. Additionally, features described with reference to certain examples may be combined in other examples.

The above describes the embodiments of the present disclosure. However, the present disclosure is not limited to the above-mentioned embodiments. Any modifications, equivalent substitutions, improvements or the like, made within the spirit and principle of the present disclosure, may fall within the protection scope of the present disclosure.

## Claims

1. A heat insulation pad, comprising a thermal insulation core material, wherein the thermal insulation core material comprises at least two layers of thermal insulation felt connected via an adhesive layer; and
the adhesive layer comprises a water-based adhesive and is provided with gas escape channels.

2. The heat insulation pad according to claim 1, wherein based on an area of the thermal insulation felt, a coverage rate of the water-based adhesive ranges from 30% to 70%; and/or,
a width of the gas escape channels ranges from 8 mm to 70 mm; and/or,
in the adhesive layer, the gas escape channels are arranged at intervals along a cross-machine direction of the thermal insulation felt; and/or,
in the adhesive layer, a shape presented by the water-based adhesive is at least one of strip-shaped, dot-shaped, and block-shaped;
preferably, in the adhesive layer, when the shape presented by the water-based adhesive is strip-shaped or block-shaped, a coating width of the water-based adhesive ranges from 8 mm to30 mm.

3. The heat insulation pad according to claim 1 or 2, wherein a thickness of the heat insulation pad is greater than 1 mm; and/or,
a thickness tolerance of the heat insulation pad is within ±0.25 mm, preferably within ± 0.15 mm; and/or,
a thickness of each layer of the thermal insulation felt is less than 0.9 mm, preferably 0.2 mm-0.8 mm; and/or,
a thickness tolerance of each layer of the thermal insulation felt is within ±0.1 mm.

4. The heat insulation pad according to any one of claims 1-3, wherein the thermal insulation felt comprises base felt and/or composite felt;
preferably, the base felt comprises at least one of pre-oxidised fibre felt, glass fibre felt, and ceramic fibre felt;
preferably, the composite felt comprises the base felt and a functional material, and the functional material preferably comprises at least one of a thermal insulation material, an opacifier material, a buffer material, and a structural component; and/or,
the water-based adhesive comprises at least one of silica sol, alumina sol, sodium polyacrylate, polyvinyl alcohol (PVA), methyl cellulose, carboxymethyl cellulose (CMC), hydroxyethyl cellulose (HEC), hydroxypropyl methyl cellulose (HPMC), and sodium alginate.

5. The heat insulation pad according to claim 4, wherein the thermal insulation material comprises at least one of thermal insulation powder, aerogel, a heat preservation material, and a fibre-reinforced aerogel composition; and/or,
the buffer material comprises foam and/or silicone rubber.

6. The heat insulation pad according to any one of claims 1-5, wherein the heat insulation pad further comprises at least one of an encapsulation layer and a functional layer;
preferably, an encapsulation material of the encapsulation layer comprises an encapsulation film material and/or an encapsulation coating;
preferably, the functional layer comprises at least one of a thermally conductive layer, a heat-absorbing layer, a heat-reflective layer, and a buffer layer;
more preferably, the buffer layer comprises foam and/or silicone rubber.

7. The heat insulation pad according to any one of claims 1-6, wherein the heat insulation pad comprises at least three layers of the thermal insulation felt, and adjacent two layers of the thermal insulation felt are connected via the adhesive layer;
preferably, on different adhesive layers, coating positions of the water-based adhesive are not completely identical.

8. A preparation method for a heat insulation pad, comprising:
(1) bonding at least two layers of thermal insulation felt with a water-based adhesive, so that adjacent layers of the thermal insulation felt are connected to each other, to obtain a bonded preform; and
(2) performing a drying treatment on the bonded preform to obtain a heat insulation pad comprising the thermal insulation felt connected via an adhesive layer;
wherein the adhesive layer is provided with gas escape channels.

9. The preparation method for the heat insulation pad according to claim 8, wherein based on an area of the thermal insulation felt, a coating rate of the water-based adhesive ranges from 30% to 70%; and/or,
a width of the gas escape channels ranges from 8 mm to 70 mm; and/or,
in the adhesive layer, the gas escape channels are arranged at intervals along a cross-machine direction of the thermal insulation felt; and/or,
in the adhesive layer, a shape presented by the water-based adhesive is at least one of strip-shaped, dot-shaped, and block-shaped;
preferably, in the adhesive layer, when the shape presented by the water-based adhesive is strip-shaped or block-shaped, a coating width of the water-based adhesive ranges from 8 mm to30 mm.

10. The preparation method for the heat insulation pad according to any one of claim 8 or 9, wherein the thermal insulation felt comprises base felt and/or composite felt;
preferably, the base felt comprises at least one of pre-oxidised fibre felt, glass fibre felt, and ceramic fibre felt;
preferably, the composite felt comprises a base felt and a functional material, the functional material preferably comprises at least one of a thermal insulation material, an opacifier material, a buffer material, and a structural component; and/or,
the water-based adhesive comprises at least one of silica sol, alumina sol, sodium polyacrylate, polyvinyl alcohol (PVA), methyl cellulose, carboxymethyl cellulose (CMC), hydroxyethyl cellulose (HEC), hydroxypropyl methyl cellulose (HPMC), and sodium alginate.

11. The preparation method for the heat insulation pad according to any one of claims 8-10, wherein in step (2), a drying method comprises at least one of oven drying, tunnel drying, and microwave drying; and
preferably, drying conditions comprise: a drying temperature of 60 °C to 200 °C, and a drying time of 1 min to 30 min.

12. The preparation method for the heat insulation pad according to claim 11, wherein conditions for the oven drying comprise: a temperature of 60 °C to 200 °C, and a drying time of 5 min to 30 min; or,
conditions for the tunnel drying comprise: a drying temperature of 120 °C to 180 °C, preferably 140-160°C, and a drying time of 1 min to 15 min, preferably 2-10 min; or,
conditions for the microwave drying comprise: a drying temperature of 70 °C to 130 °C, preferably 80-120°C, and a drying time of 1 min to10 min, preferably 2-5 min.

13. The preparation method for the heat insulation pad according to any one of claims 8-12, further comprising:
providing a functional layer on at least one side of at least one layer of the thermal insulation felt and/or outside a thermal insulation core material; and
preferably, the functional layer comprises at least one of a thermally conductive layer, a heat-absorbing layer, a heat-reflective layer, and a buffer layer;
more preferably,wherein the buffer layer comprises foam and/or silicone rubber.

14. The preparation method for the heat insulation pad according to any one of claims 8-13, further comprising:
performing an encapsulation treatment on a dried thermal insulation core material to obtain the heat insulation pad;
preferably, wherein a material employed in the encapsulation treatment comprises an encapsulation film material and/or an encapsulation coating; and
preferably, the encapsulation coating is a flame-retardant coating.

15. An application of the heat insulation pad according to any one of claims 1-7 or the heat insulation pad prepared by the preparation method according to any one of claims 8-14 as a thermal insulation component in a battery field.
